(19) Europäisches Patentamt
European Patent Office
Office européen des brevets

(11) **EP 2 748 809 B1**

(12) **EUROPEAN PATENT SPECIFICATION**

(45) Date of publication and mention
of the grant of the patent:
**30.11.2016 Bulletin 2016/48**

(21) Application number: **12762230.6**

(22) Date of filing: **22.08.2012**

(51) Int Cl.:
**G09G 5/00** (2006.01)

(86) International application number:
**PCT/EP2012/066370**

(87) International publication number:
**WO 2013/026891 (28.02.2013 Gazette 2013/09)**

(54) **DISPLAY DEVICE CONTROL**

STEUERUNG FÜR EINE ANZEIGEVORRICHTUNG

COMMANDE DE DISPOSITIF D'AFFICHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.08.2011 GB 201114439**

(43) Date of publication of application:
**02.07.2014 Bulletin 2014/27**

(73) Proprietor: **Apical Ltd.**
**London W1B 5TD (GB)**

(72) Inventor: **TUSCH, Michael**
**London**
**Greater London W1B 5TD (GB)**

(74) Representative: **EIP**
**Fairfax House**
**15 Fulwood Place**
**London WC1V 6HU (GB)**

(56) References cited:
**WO-A1-2011/033669      US-A1- 2002 024 529**
**US-A1- 2005 068 332      US-A1- 2005 212 824**

**Description**

Technical Field

The present invention relates to a method for controlling a display device and to a display control system for carrying out the method.

Background

It is known to incorporate an ambient light sensor in a display device so that the ambient light sensor data can be used to modify the screen brightness or the gamma curve or a combination of these two controls. For example, patent application US 2005/68332 discloses a display device incorporating an ambient light sensor. The screen brightness is controlled by adjusting the backlight intensity of the display device based on the ambient light level. The gamma curve of the display device is modified to compensate the image colour brightness to the change in backlight. Modification of the gamma curve is a form of dynamic range compression. It is an object of the invention to improve the control of the screen brightness and the dynamic range compression in dependence on the ambient light level.

Summary

In accordance with embodiments according to one aspect, there is provided a method of controlling in a display device screen brightness and strength of dynamic range compression of display data in dependence on ambient light level, the method comprising the steps of :

acquiring ambient light level values from one or more ambient light sensors; averaging the ambient light level values using a first method to obtain a first average value wherein the first method uses a first temporal averaging; averaging the ambient light level values using a second method to obtain a second average value, wherein the second method uses a second temporal averaging, different from the first temporal averaging; wherein the first temporal average is over a longer period than the second temporal average; wherein the first and / or second temporal averaging uses moving window averaging; using the first average value for controlling the screen brightness; using the second average value for controlling the strength of the dynamic range compression; and resetting an averaging window when at least one of one or more latest acquired ambient light levels deviates from a current first or second average value by more than a predetermined threshold value.

Embodiments are based on the recognition that using the same way of averaging the ambient light level to control both the screen brightness and the strength of the dynamic range compression is not optimal because of the different effect that changes in screen brightness and dynamic range compression strength have on an observer of the image displayed on the display device.

Features and advantages will become apparent from the following description of preferred embodiments, given by way of example only, which is made with reference to the accompanying drawings.

Brief Description of the Drawings

Figure 1 shows a prior art display control system;
Figure 2 shows a display control system according to embodiments; and
Figure 3 shows a display apparatus in accordance with embodiments.

Detailed Description of Preferred Embodiments

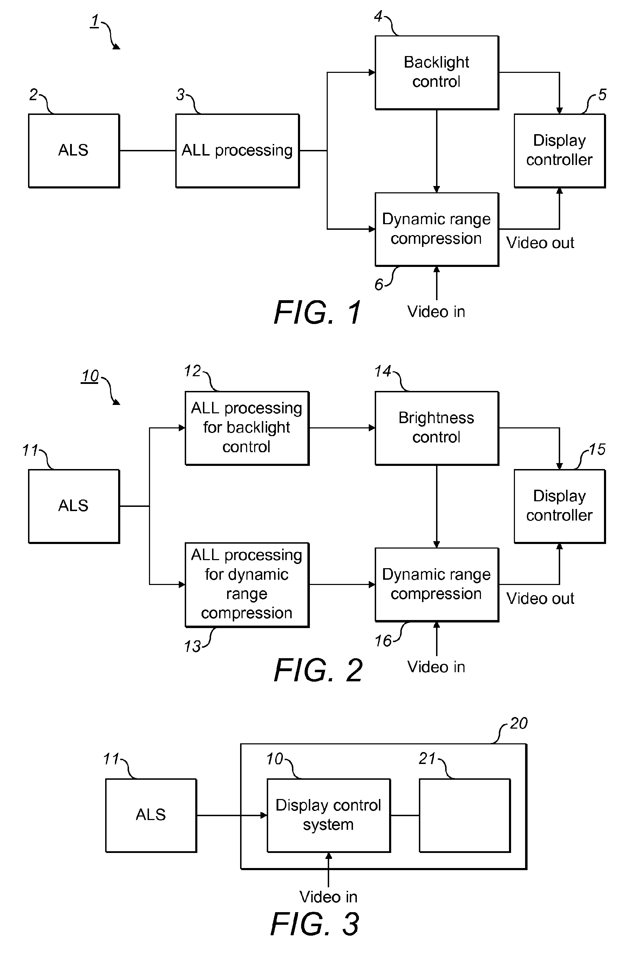

Figure 1 shows a prior art display control system 1. An ambient light sensor 2 measures the ambient light incident on a display device and provides as output an ambient light level. An ambient light level processor 3 processes the ambient light level by a statistical method such as moving window averaging. The average value output by the ambient light level processor is input in a backlight control unit 4, which generates a signal for setting the intensity of the backlight in dependence on the average value. The signal is input to a display controller 5. The ambient light level is typically used to decrease the display brightness in dark conditions and increase its brightness in bright conditions.

The same average value output by the ambient light level processor 3 is also used as input for a video processor 6, which can alter the brightness of individual pixels of the display device in order to increase or decrease their relative brightness values independent of the overall display brightness. This type of processing is known as dynamic range compression or tone mapping; see e.g. the article 'Display Adaptive Tone Mapping' by R. Mantiuk et al in ACM Transactions on Graphics, Vol. 27, No. 3, Article 68 of August 2008. The average value is used in the video processor 6 to control the strength of the dynamic range compression in order to achieve a better viewing experience in changing ambient light.

A video input of the video processor 6 is processed in dependence on the average signal and a signal from the backlight control unit 4 representing the backlight intensity. The video output of the video processor is input to the display controller 5.

The dynamic range compression adapts the content to be displayed to the contrast ratio of the display device. The contrast ratio of a display device is defined as the difference in brightness of the darkest and brightest pixels that the display device can simultaneously produce. Content to be displayed has a dynamic range determined by the difference in brightness of the darkest and brightest details within a given image or video frame. To show the content optimally, the contrast ratio of the display device should be larger than the maximal dynamic range of the content to be displayed.

The contrast ratio of a display device is reduced in the presence of ambient light compared to that in complete darkness, primarily due to reflections from the screen surface of the display device. As the ambient light level is increased, the dynamic range of the content and the contrast of the display device can be matched in two ways. Firstly, the contrast ratio of the display device can be increased by increasing the display brightness, for example by increasing the power delivered to an LED backlight in an LCD display device or by increasing the maximum power associated with a white pixel on an OLED display device. Secondly, the dynamic range of the content can be reduced by a dynamic range compression module using one of a variety of algorithms to match the reduced contrast.

The use of the same average signal for controlling both the display brightness and the strength of the dynamic range compression is not optimal because of the different effect of changes in display brightness and dynamic range compression.

The human eye is very sensitive to changes in display brightness, such that rapid changes commonly lead to an observable flicker which is irritating to the viewer. Also, some display devices, for example those based on OLED technology, are unable to change brightness continuously and can only select discrete brightness levels. The transition between one level and the next based on ambient light must be dampened to avoid rapid switching between two discrete values. For this reason, the common techniques of moving-window time filtering and hysteresis are widely employed.

However, changes in the strength of dynamic range compression may be effected rapidly without irritation to the viewer, especially if the dynamic range compression algorithm is locally adaptive, meaning that different processing strengths can be applied to different regions of an image or video frame, depending on its visual content. Examples of such locally adaptive algorithms are well known; see e.g. patent US 7302110. Since the effect of ambient light on display contrast is primarily to raise the minimum grey level, being the darkest pixel intensity which is visible to the user, such a locally adaptive algorithm can selectively adjust only those pixels which are most affected by ambient light. This implies that dynamic range compression strength can be based on the actual light level, as opposed to a longer-term average, without risk of degrading image quality if the actual light level estimation is in error or is rapidly changing.

It is therefore advantageous to use different processing of the ambient light levels for the brightness control and the dynamic range compression control and provide different estimators of ambient light. This is realised in a display control system according to the invention. Figure 2 shows an embodiment of a display control system 10 according to the invention. An ambient light sensor 11 measures the ambient light level. The ambient light level values are processed by a first ambient light level processor 12 and a second ambient light level processor 13, the two processors using a first and a second, different method, respectively, of processing the ambient light levels.

The first processor 12 uses a first method to form a first average value of the ambient light level values, which is input to a brightness control unit 14. An output signal of the brightness control unit 14 is input in a display controller 15, where it may be used for controlling the display brightness, for example by setting the intensity of a backlight of the display device or by setting the maximum brightness of a pixel such as in an OLED display device.

The second processor 13 uses a second method to form a second average value of the ambient light level values, which is input to a video processor 16, where it is used to set the strength of the dynamic range compression. The video output of the video processor is input to the display controller 15. Although the embodiment shown uses video input, embodiments can also be used for input of static images.

Although Figure 2 shows the ambient light level processors 12 and 13 as separate processors, they may be integrated into a single processor. The same applies to the processors used in any of the elements 12-16, two or more of which may be integrated in one processor. The processing may be carried out in hardware in a circuit or as a computer program in a digital processor.

The ambient light levels obtained from the ambient light sensor 11 can be time averaged, e.g. to avoid rapid changes due to incorrect measurements caused by for example a user covering the sensor by his hand. A common method for temporal averaging is the moving window method, which forms a time-dependent first average value $AL1_j$ over the N most recent readings $L_i$ of the ambient light level:

$$AL1_j = N^{-1} \sum_{i=1}^{N} L_{j-i+1}$$

where consecutive readings are taken at intervals of $\Delta t$. The value of $\Delta t$ may be determined by the rate at which the ambient light sensor delivers data, which may range from approximately 0.015 seconds to approximately 1 seconds. For example $\Delta t$ may equal to 0.1 seconds. Other methods for averaging are also possible.

The method may be refined by establishing a reset threshold, such that if an individual reading $L_i$ deviates significantly from the current average, $|L_{i+1} - L_i| > L_{th}$, $L_{th}$ being a predetermined threshold value, then the averaging window is reset. The method stabilises the variation in the control of the display device while allowing for a discrete rapid change, for example if the user turns on or off room lights.

The averaging period, N $\Delta$t, for the brightness control may for example be 30 seconds or more. This period is unnecessarily long for the purpose of controlling dynamic range compression, which is less prone to producing observable flickering to the viewer. Hence, the averaging period for controlling the dynamic range compression is shorter than for the brightness control. The former averaging period may be less than 1 second.

The method for averaging the ambient light levels may alternatively use a recursive method for forming the second average value $AL2_j$, for example:

$$AL2_j = rL_j + (1-r)AL2_{j-1}$$

where r is a recursion coefficient, which may be set to 1 if most rapid adaptation is desired, for example in a moving vehicle, or reduced for example to 0.25 if a smoother variation is desired. The interval $\Delta$t can be in the range described above, for example 0.1 seconds. The interval is preferably equal to the interval used for determining the first average value, allowing both methods to use the same readings of the ambient light level.

In various embodiments, a moving window averaging method may be used for the ambient light sensor data for both screen brightness control and for dynamic range control. The screen brightness control averaging method may have N set to a relatively large value, for example 300, corresponding to an averaging time of 30 seconds, and the dynamic range control averaging method may have N set to a relatively small value, e.g. a value which is less than one fifth and preferably less than one tenth of that, for example, 10, corresponding to an averaging time of 1 second. An alternative is to use a recursive averaging method for both screen brightness control and for dynamic range control. The screen brightness control averaging method may have r set to a relatively low value, for example 0.05, and the dynamic range control averaging method may have r set to a relatively high value, e.g. a value which is more than five times and preferably more than ten times that value, for example 0.75. A further alternative is to use a moving window averaging method for screen brightness control and a recursive averaging method for dynamic range control, or vice-versa. Other averaging techniques may also be used, as will be familiar to those skilled in the art.

The ambient light sensor 11 may include a plurality of sensors to avoid incorrect readings due to the position of a single sensor. The first and second method may form different spatial averages over the plurality of sensors: the first method forming a first weighted average over the ambient light sensors and the second method forming a second, different weighted average over the ambient light sensors.

The first averaging method for brightness control uses preferably a spatial averaging equally over the ambient light sensors to produce a measure of diffuse ambient light. The first average value AL1 can be calculated as:

$$AL1 = K^{-1} \sum_l L_l$$

where the sum is over the ambient light values L of K sensors 1. The method may be refined by excluding from the sum ambient light values of sensors that are occluded, e.g. by excluding sensors for which $L_j<L_{th}$, where $L_{th}$ is a predetermined threshold value, which preferably has a zero or near-zero value associated with an occluded sensor.

The second average value for controlling the dynamic range compression is preferably weighted heavily towards those sensors mounted on the display device itself to produce a measure of the specular component of reflection of ambient light on the screen of the display device. This enables the displayed content to respond to changes in ambient light that fall directly on the display itself.

The spatial averaging may include averaging over a first set of sensors in the first method and over a second set of sensors in the second method. The two sets may be overlapping or disjoint. A set may include one or more sensors.

The use of two separate and independent average values for the ambient light provides for a better visual experience of displayed content to the user and ability to produce stable visual quality under a wide range of ambient light conditions. A display control system may use either the temporal averaging or the spatial averaging or both of them. When using a plurality of ambient light sensors, different spatial averaging may be combined with equal temporal averaging and with different temporal averaging.

Figure 3 shows schematically a display apparatus 20 in accordance with embodiments including a display control system 10 in accordance with embodiments, and a display device 21. The display device, e.g. an LCD, OLED or other display device, forms an image of the content for viewing by a user.

It will be understood that the processors or processing systems referred to herein may in practice be provided by a single chip or integrated circuit or plural chips or integrated circuits, optionally provided as a chipset, an application-specific integrated circuit (ASIC), field-programmable gate array (FPGA), etc. The chip or chips may comprise circuitry (as well as possibly firmware) for embodying at least one or more of a data processor or processors, a digital signal processor or processors, which are configurable so as to operate in accordance with the exemplary embodiments. In this regard, the exemplary embodiments may be implemented at least in part by computer software stored in memory and executable by the processor, or by hardware, or by a combination of software and/or firmware stored on a non-transitory computer-readable storage medium and hardware.

Although at least some aspects of the embodiments described herein with reference to the drawings comprise computer processes performed in processing systems or processors, the invention also extends to computer programs, particularly computer programs on or in a carrier, adapted for putting the embodiments into practice. The program may be in the form of source code, object code, a code intermediate source and object code such as in partially compiled form, or in any other form suitable for use in the implementation of the processes according to the embodiments described herein. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium; an optical memory device; etc.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A method of controlling in a display device screen brightness and strength of dynamic range compression of display data in dependence on ambient light level, the method comprising the steps of:

   acquiring ambient light level values from one or more ambient light sensors;
   averaging the ambient light level values using a first method to obtain a first average value, wherein the first method uses a first temporal averaging;
   averaging the ambient light level values using a second method to obtain a second average value, wherein the second method uses a second temporal averaging different from the first temporal averaging, the first temporal averaging is performed over a longer period than the second temporal averaging, and the first and / or second temporal averaging uses moving window averaging;

   using the first average value for controlling the screen brightness;
   using the second average value for controlling the strength of the dynamic range compression; and
   resetting the corresponding averaging window when at least one of one or more latest acquired ambient light levels deviates from a current first or second average value by more than a predetermined threshold value.

2. A method according to claim 1, in which the second temporal averaging uses recursive averaging.

3. A method according to claim 1, comprising using a plurality of ambient light sensors, in which the first method forms a first weighted average over the ambient light sensors and the second method forms a second, different, weighted average over the ambient light sensors.

4. A method according to claim 3, in which the first weighted average weights equally over the plurality of ambient light sensors.

5. A method according to claim 3 or 4, in which the second weighted average weights more heavily towards those of the plurality of ambient light sensors that face in the same direction as a front of the display device.

6. A method according to any of the preceding claims, in which the dynamic range compression is locally adaptive.

7. A display control system including a processor for carrying out a method according to any one of claims 1 to 6.

8. A display apparatus including a display control system according to claim 7 and a display device.

9. A computer program adapted to carry out a method according to any one of claims 1 to 6.

10. A data carrier including a computer program according to claim 9.

**Patentansprüche**

1. Verfahren zum Steuern der Bildschirmhelligkeit und Stärke der Dynamikbereichkomprimierung von Anzeigedaten in Abhängigkeit eines Umgebungslichtpegels eines Anzeigegeräts, wobei das Verfahren die Schritte umfasst:

   Erlangen von Umgebungslichtpegelwerten von einem oder mehreren Umgebungslichtsensoren;

Mitteln der Umgebungslichtpegelwerte unter Verwendung eines ersten Verfahrens zum Erhalten eines ersten Mittelwertes, wobei das erste Verfahren eine erste zeitliche Mittelwertbildung verwendet;

Mitteln der Umgebungslichtpegelwerte unter Verwendung eines zweiten Verfahrens zum Erhalten eines zweiten Mittelwertes, wobei das zweite Verfahren eine zweite zeitliche Mittelwertbildung verwendet, die von der ersten zeitlichen Mittelwertbildung unterschiedlich ist, die erste zeitliche Mittelwertbildung über eine längere Periode als die zweite zeitliche Mittelwertbildung durchgeführt wird und die erste und/oder zweite zeitliche Mittelwertbildung eine gleitende Fenstermittelwertbildung verwendet;

Verwenden des ersten Mittelwertes zum Steuern der Bildschirmhelligkeit;

Verwenden des zweiten Mittelwertes zum Steuern der Stärke der Dynamikbereichkomprimierung; und

Neueinstellen des korrespondierenden Mittelwertfensters wenn mindestens einer des einen oder der mehreren zuletzt erlangten Umgebungslichtpegel von einem derzeitigen ersten oder zweiten Mittelwert um mehr als einen vorbestimmten Schwellenwert abweicht.

2. Verfahren nach Anspruch 1, wobei die zweite zeitliche Mittelwertbildung eine rekursive Mittelwertbildung verwendet.

3. Verfahren nach Anspruch 1, umfassend das Verwenden mehrerer Umgebungslichtsensoren, bei dem das erste Verfahren eine erste gewichtete Mittelwertbildung über die Umgebungslichtsensoren und das zweite Verfahren eine zweite, unterschiedlich gewichtete Mittelwertbildung über die Umgebungslichtsensoren bildet.

4. Verfahren nach Anspruch 3, bei dem bei der ersten gewichteten Mittelwertbildung die mehreren Umgebungslichtsensoren gleich gewichtet werden.

5. Verfahren nach Anspruch 3 oder 4, bei dem bei der zweiten gewichteten Mittelwertbildung eine stärkere Gewichtung der mehreren der Umgebungslichtsensoren, die in die gleiche Richtung, wie die Vorderseite des Anzeigegeräts, zeigen, erfolgt.

6. Verfahren nach einem der vorhergehenden Ansprüche, wobei die Dynamikbereichkomprimierung lokal adaptiv ist.

7. Anzeigesteuersystem, umfassend einen Prozessor zum Ausführen eines Verfahrens nach einem der Ansprüche 1 bis 6.

8. Anzeigevorrichtung umfassend ein Anzeigesteuersystem nach Anspruch 7 und ein Anzeigegerät.

9. Computerprogramm, das eingerichtet ist, ein Verfahren nach einem der Ansprüche 1 bis 6 auszuführen.

10. Datenträger beinhaltend ein Computerprogramm nach Anspruch 9.

**Revendications**

1. Procédé de commande dans un dispositif d'affichage de la luminosité de l'écran et de la force de compression de plage dynamique de données d'affichage en fonction du niveau de lumière ambiante, le procédé comprenant les étapes consistant à :

acquérir des valeurs de niveaux de lumière ambiante d'un ou plusieurs capteurs de lumière ambiante ;

prendre la moyenne des valeurs de niveaux de lumière ambiante en utilisant un premier procédé pour obtenir une première valeur moyenne, dans lequel le premier procédé utilise une première prise de moyenne temporelle ;

prendre la moyenne des valeurs de niveaux de lumière ambiante en utilisant un second procédé pour obtenir une seconde valeur moyenne, dans lequel le second procédé utilise une seconde prise de moyenne temporelle différente de la première prise de moyenne temporelle, la première moyenne temporelle se fait sur une plus longue période que la seconde moyenne temporelle, et la première et/ou la seconde prise de moyenne temporelle utilise une prise de moyenne à fenêtre mobile ;

utiliser la première valeur moyenne pour commander la luminosité de l'écran ;

utiliser la seconde valeur moyenne pour commander la force de compression de plage dynamique ; et

remettre à zéro la fenêtre de prise de moyenne correspondante lorsqu'au moins l'un des un ou plusieurs niveaux de lumière ambiante les plus anciennement acquis dévient d'une première ou d'une seconde valeur moyenne courante de plus d'une valeur de seuil prédéterminée.

2. Procédé selon la revendication 1, dans lequel la seconde prise de moyenne temporelle utilise une prise de moyenne récursive.

3. Procédé selon la revendication 1 comprenant l'utilisation d'une pluralité de capteurs de lumière ambiante, dans lequel le premier procédé forme une première moyenne pondérée sur les capteurs de lumière ambiante et le second procédé forme une seconde moyenne pondérée, différente, sur les capteurs de lumière ambiante.

4. Procédé selon la revendication 3, dans lequel la première moyenne pondérée pèse de manière égale sur la pluralité de capteurs de lumière ambiante.

5. Procédé selon la revendication 3 ou 4, dans lequel la seconde moyenne pondérée pèse plus lourdement vers les capteurs de la pluralité de capteurs de lumière ambiante qui sont orientés dans la même direction que l'avant du dispositif d'affichage.

6. Procédé selon l'une quelconque des revendications précédentes, dans lequel la compression de plage dynamique est localement adaptative.

7. Système de commande d'affichage comprenant un processeur pour réaliser un procédé selon l'une quelconque des revendications 1 à 6.

8. Appareil d'affichage comprenant un système de commande d'affichage selon la revendication 7 et un dispositif d'affichage.

9. Programme informatique adapté pour réaliser un procédé selon l'une quelconque des revendications 1 à 6.

10. Support de données comprenant un programme informatique selon la revendication 9.

*FIG. 1*

*FIG. 2*

*FIG. 3*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200568332 B

- US 7302110 B

**Non-patent literature cited in the description**

- **R. MANTIUK et al.** Display Adaptive Tone Mapping. *ACM Transactions on Graphics,* August 2008, vol. 27 (3